# EUROPEAN PATENT SPECIFICATION

(11) **EP 4 299 261 B1**
(45) Date of publication and mention of the grant of the patent: **03.09.2025**
(21) Application number: 21927905.6
(22) Date of filing: 26.02.2021
(51) Int. Cl.: B25J 19/00

(54) **APPARATUS CONTROL SYSTEM, APPARATUS CONTROL METHOD, AND APPARATUS CONTROL PROGRAM**
GERÄTESTEUERUNGSSYSTEM, GERÄTESTEUERUNGSVERFAHREN UND GERÄTESTEUERUNGSPROGRAMM
SYSTÈME DE COMMANDE D'APPAREIL, PROCÉDÉ DE COMMANDE D'APPAREIL ET PROGRAMME DE COMMANDE D'APPAREIL

(43) Date of publication of application: 03.01.2024
(73) Proprietor: Kabushiki Kaisha Yaskawa Denki, Kitakyushu-shi, Fukuoka 806-0004 (JP)
(72) Inventor: MORIWAKA, Ryota, Kitakyushu-shi, Fukuoka 806-0004 (JP); MINAMIDA, Yuki, Kitakyushu-shi, Fukuoka 806-0004 (JP); SHIMODOME, Ryo, Kitakyushu-shi, Fukuoka 806-0004 (JP); FUJINO, Kazuo, Kitakyushu-shi, Fukuoka 806-0004 (JP); YUBA, Tadasuke, Kitakyushu-shi, Fukuoka 806-0004 (JP); KOBAYASHI, Kazutoshi, Kitakyushu-shi, Fukuoka 806-0004 (JP)
(74) Representative: BRP Renaud & Partner mbB Rechtsanwälte Patentanwälte Steuerberater
(86) International application number: PCT/JP2021/007442
(87) International publication number: WO 2022/180805

(56) References cited:
- WO-A1-2021/005517
- JP-A- 2007 226 492
- JP-A- 2007 226 492
- JP-A- 2009 289 131
- JP-B1- 6 754 883

## Description

### TECHNICAL FIELD

An aspect of the present disclosure relates to an apparatus control system, an apparatus control method, and an apparatus control program.

### BACKGROUND ART

JP 2019-209454 A discloses a system including a robot, a machining device, a robot controller that controls the robot, a machining device controller that controls the machining device, and a programmable logic controller that generates instructions for the robot controller and the machining device controller.

WO 2021/005517 A1 describes multiple time synchronization protocols within an industrial device, wherein time references from each industrial device within a first set of industrial devices and a second set of industrial devices are obtained to provide a basis for synchronization of clocks of the industrial devices. A principal time reference is selected and used for controlled communication between the devices.

JP 2007 226492 A discloses a motion control system which performs synchronous operation in an optimal minimum delay time in accordance with changing network load situations. Each motion controller measures a communication delay in a preset delay monitoring cycle when the controller is a master itself, or returns a measurement result to the master when the controller is a slave. A synchronization control processing part is provided for instructing a motion control processing part and the slave to start operation in a time adding the delay time to the current time during the synchronous operation when the controller is a master itself, and for instructing the motion control processing part to start operation in a time instructed by the master when it is a slave.

### SUMMARY OF INVENTION

### TECHNICAL PROBLEM

In an aspect of the present disclosure, it is desirable to ensure safety of synchronization processing in a system.

### SOLUTION TO PROBLEM

The invention is defined by the subject-matter of the independent claims and solves the technical problem.

### ADVANTAGEOUS EFFECTS OF INVENTION

According to an aspect of the present disclosure, it is possible to ensure safety of synchronization processing in a system.

### BRIEF DESCRIPTION OF DRAWINGS

FIG. 1 is a diagram illustrating an example of an overall configuration of an apparatus control system.
FIG. 2 is a state transition diagram illustrating an example of state transition in the apparatus control system.
FIG. 3 is a state transition diagram illustrating an example of state transition in the apparatus control system.
FIG. 4 is a state transition diagram illustrating an example of state transition in the apparatus control system.
FIG. 5 is a diagram illustrating an example of a functional configuration of the apparatus control system.
FIG. 6 is a diagram illustrating an example of a hardware configuration of a computer used in the apparatus control system.
FIG. 7 is a flowchart illustrating an example of an operation of the apparatus control system.
FIG. 8 is a flowchart illustrating an example of an operation of the apparatus control system.

### DESCRIPTION OF EMBODIMENTS

An Embodiment in the present disclosure will be described in detail below with reference to the accompanying drawings. In the description of the drawings, elements which are the same or equivalent elements are given the same reference signs, and overlapping descriptions thereof are omitted.

### Overview of System

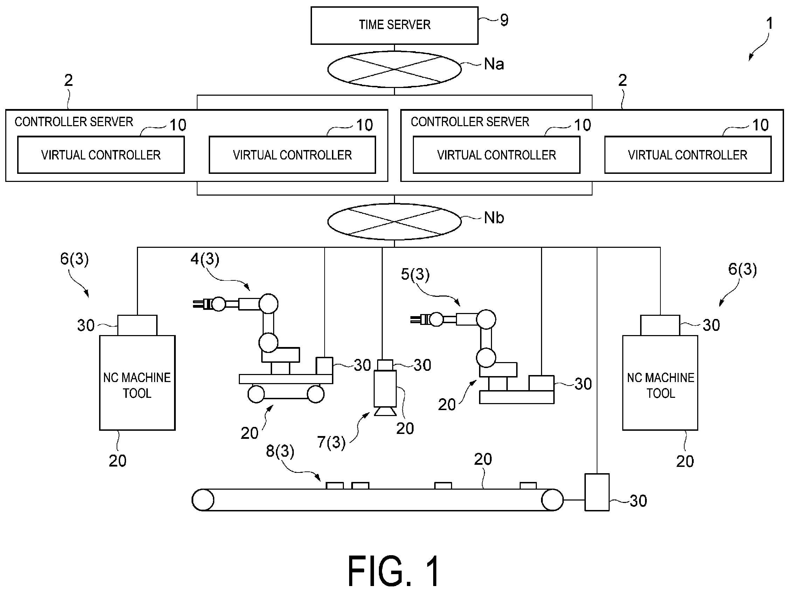

FIG. 1 is a diagram illustrating an example of an overall configuration of an apparatus control system 1 according to an embodiment. The apparatus control system 1 is a mechanism for controlling a local apparatus 3 disposed in an actual work environment (i.e., a field). In an example, the apparatus control system 1 includes at least one controller server 2 and at least one local apparatus 3. Each controller server 2 includes at least one virtual controller 10 implemented by software on an arithmetic device of the controller server 2. Each virtual controller 10 transmits an instruction to at least one local apparatus 3 to control the local apparatus 3. It can be said that the virtual controller 10 is a host controller for the local apparatus 3. One virtual controller 10 corresponds to at least one local apparatus 3. A plurality of virtual controllers 10 may correspond to one local apparatus 3.

The apparatus control system 1 may include a plurality of types of local apparatuses 3. FIG. 1 illustrates a mobile robot 4, a stationary robot 5, an NC machine tool 6, an environment sensor 7, and a conveyor 8 as examples of the local apparatuses 3. The mobile robot 4 is a robot capable of autonomous travel. In an example, the mobile robot 4 includes an unmanned transport vehicle that autonomously travels in response to a movement instruction, and a robot that performs work on a workpiece in accordance with a work instruction. The unmanned transport vehicle may be, for example, an electric Automated Guided Vehicle (AGV). The stationary robot 5 is a robot fixed in a work environment (for example, on a floor). Each of the mobile robot 4 and the stationary robot 5 may be a six-axis vertical articulated robot, a seven-axis redundant robot having an additional one-axis joint added, a so-called scalar articulated robot, or a so-called parallel link robot. In an example, each of the mobile robot 4 and the stationary robot 5 has a tip portion, and a tool corresponding to the purpose of processing is attached to this tip portion. Examples of the tool include a suction nozzle, a robotic hand, a machining tool, and a welding gun. The NC machine tool 6 is a device that performs machining such as cutting on a workpiece in accordance with a machining instruction. The environment sensor 7 is a device that acquires information on a work environment in accordance with a sensing instruction. The environment sensor 7 may be, for example, a camera that acquires an image of the work environment or a temperature sensor that acquires a temperature of the work environment. The conveyor 8 is a device that conveys a workpiece in accordance with a conveyance instruction. Examples of the conveyor 8 include a belt conveyor and a roller conveyor.

In an example, each local apparatus 3 includes an apparatus main body 20 that provides a main function of the local apparatus 3 and a local controller 30 that controls the apparatus main body 20. The local controller 30 controls the apparatus main body 20 in accordance with an instruction from the virtual controller 10, and transmits a response to the instruction to the virtual controller 10. In this example, the local controller 30 is an element of the local apparatus 3. As another example, the local controller 30 itself may be present as the local apparatus 3 in the apparatus control system 1. The local controller 30 that controls the mobile robot 4 or the stationary robot 5 is also referred to as a robot controller.

In an example, the local apparatus 3 includes at least one of a control target implementing a motion and an input/output device. In the present disclosure, "implementing a motion" means displacing in a real space. The displacement includes at least one of a change in position (i.e., movement), a change in orientation, and a change in shape. The displacement may be visible or may occur within a housing of the local apparatus 3 (i.e., may be invisible). The control target is constituted by at least one of the apparatus main body 20 and the local controller 30. The input/output device is a device that inputs or outputs information or data, and in an example, maintains a given orientation at a given position without being displaced. Each of the control target and the input/output device is controlled by the local controller 30 in accordance with an instruction from the virtual controller 10. In the example of FIG. 1, it can be said that the mobile robot 4, the stationary robot 5, the NC machine tool 6, and the conveyor 8 are control targets, and the environment sensor 7 is an input/output device.

In an example, the virtual controller 10 repeatedly performs first processing of generating an instruction for controlling the local apparatus 3, and the local apparatus 3 repeatedly performs second processing of performing processing corresponding to the instruction. In this example, the apparatus control system 1 synchronizes the time between each virtual controller 10 and each local apparatus 3, and causes each local apparatus 3 to operate based on periodic communication. In a case that the periodic communication is applied, the virtual controller 10 outputs an instruction with a given period, and the local apparatus 3 operates based on the instruction with the period. The local apparatus 3 outputs a response to the virtual controller 10 with the period, and the virtual controller 10 acquires the response with the period.

In an example, the apparatus control system 1 acquires a global time based on an external global clock and performs time synchronization based on the global time. For example, the virtual controller 10 connects to a time server 9 having the global clock via a first communication network Na to acquire the global time from the time server 9. The virtual controller 10 and the local apparatus 3 are connected to each other via a second communication network Nb, and perform communication and control based on the time synchronized based on the global time. In order to implement the time synchronization of the apparatus control system 1, various methods such as Precision Time Protocol (PTP), generalized PTP (gPTP), and Time Sensitive Networking (TSN) may be employed. The virtual controller 10 may acquire the global time through a device or a method other than the time server 9.

Each of the first communication network Na and the second communication network Nb may be a wired network, a wireless network, or a combination thereof. Each of the first communication network Na and the second communication network Nb may be constructed at least partially in a manner of including a mobile communication system. In an example, the first communication network Na may be constituted by the Internet or may be constituted by a local area network such as Ethernet (registered trademark). The second communication network Nb may be constituted by, for example, a mobile communication system such as the fifth generation mobile communication system (5G). In an example, the first communication network Na and the second communication network Nb are networks that employ aperiodic communication. Therefore, at least a part of the aperiodic communication in the second communication network Nb may be constituted by the mobile communication system. In this example, the apparatus control system 1 performs the time synchronization between the virtual controller 10 and the local apparatus 3 using the second communication network Nb (i.e., aperiodic communication), and further implements periodic communication. Here, the term "periodic communication" refers to a communication scheme for performing information communication at a regular time interval in accordance with a predetermined format. On the other hand, the aperiodic communication refers to a communication scheme in which the timing of data communication is not necessarily determined.

In an example, since high-speed wireless communication has become possible due to the fifth generation mobile communication system (5G) becoming commonplace, the possibility of not only apparatus control via wired communication but also apparatus control via wireless communication is increasing. In a case that the local apparatus 3 includes a robot, the apparatus control system may be implemented as a cloud robotics system. On the other hand, in a case that an instruction and a response are transmitted and received via aperiodic communication by 5G or the like, there is a possibility that a non-negligible fluctuation occurs in the timing of receiving an indication or the response due to various factors in the communication network to make the periodic communication difficult to perform. In an example, in the apparatus control system 1, in order to enhance reliability of the periodic communication, the virtual controller 10 and the local apparatus 3 transmit and receive communication data including a message indicating an instruction or a response and a time at which processing corresponding to the message is to be performed. The time can also be referred to as a message opening time. In the present disclosure, the time (opening time) is also referred to as a processing time.

It is assumed that the virtual controller 10 repeatedly performs the first processing and the local apparatus 3 repeatedly performs the second processing. As at least a part of the first processing, the virtual controller 10 transmits communication data indicating the processing time to the local apparatus 3 via the second communication network Nb (i.e., through aperiodic communication). As at least a part of the second processing, the local apparatus 3 refers to the processing time indicated in the communication data and performs processing corresponding to the communication data at the processing time. This means that the local apparatus 3 buffers the message until the processing time comes, and brings up the message and performs the processing when the processing time comes for the first time. Through this buffering, the fluctuation (error) of the transmission and reception timing of the communication data through the aperiodic communication is absorbed, and the periodic communication is maintained.

As described above, each virtual controller 10 and each local apparatus 3 can bring up a message with an appropriate timing by performing the time synchronization in the apparatus control system 1 and setting the processing time based on the synchronized time. In the repeated executing in each of the virtual controller 10 and the local apparatus 3, the processing based on the periodic communication (periodic control) is implemented by using the processing time.

In an example, the apparatus control system 1 performs given error handling when a phenomenon has occurred that hinders the periodic control, that is, an error related to synchronization between the virtual controller 10 and the local apparatus 3. In the present disclosure, the error is also referred to as a synchronization error. The error handling is processing for ensuring safety of the synchronization processing in the apparatus control system 1.

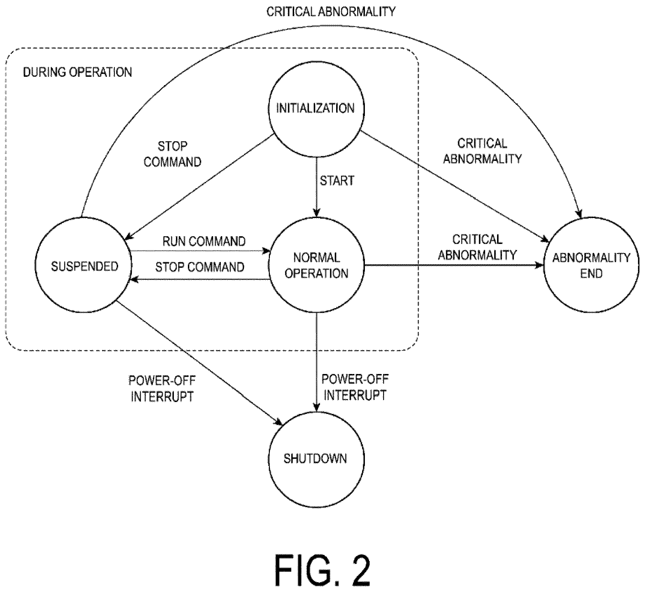

State transition in the apparatus control system 1 in consideration of the error handling will be described with reference to FIGS. 2 to 4. FIGS. 2 to 4 are each a state transition diagram illustrating an example of state transition in the apparatus control system 1.

FIG. 2 illustrates state transition focusing on individual devices in the apparatus control system 1 such as the controller server 2, the virtual controller 10, and the local apparatus 3. In this example, the device is in an "initialization" state when power is turned on, and then transitions to "normal operation" state upon being started thereafter. When a power-off interrupt signal is output from the processor during the normal operation, the device transitions to a "shutdown" state. In the initialization or normal operation, when a stop command is output from the processor for debugging or the like, the device transitions to a "suspended" state. The suspended device returns to the normal operation in accordance with a RUN command from the processor, and is shut down by a power-off interrupt signal from the processor. When a critical abnormality occurs in the initialization, normal operation, or suspended state, the device transitions to an "abnormality end" state.

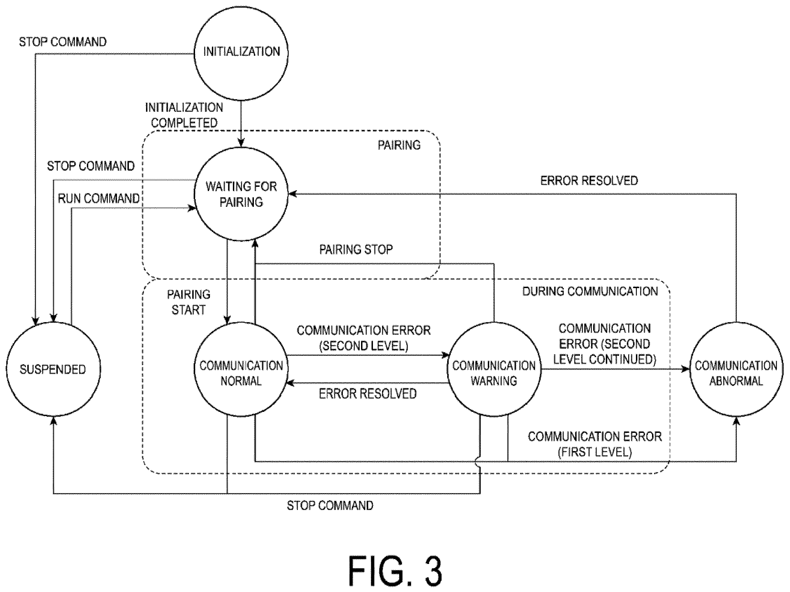

FIG. 3 illustrates state transition focusing on a network connection (i.e., communication) between the virtual controller 10 and the local apparatus 3. In this example, the state transitions from "initialization" to "waiting for pairing" when initialization such as parameter settings is completed, and when pairing is started thereafter, the state transitions from "waiting for pairing" to "communication normal". When a communication error of a first level occurs in the "communication normal" state, the state transitions to "communication abnormal". When a communication error of a second level lower than the first level has occurred in the "communication normal" state, the state transitions to "communication warning", and when the communication error is resolved, the state returns to "communication normal". While the state is "communication warning" when the communication error of the first level occurs or the communication error of the second level continues for a given time window, the state transitions to "communication abnormal". When the communication error causing "communication abnormal" is resolved, the state transitions to "waiting for pairing". When pairing is stopped while the state is "communication normal" or "communication warning", the state also transitions to "waiting for pairing". In the state of initialization, waiting for pairing, communication normal, or communication warning, the device transitions to a "suspended" state when a stop command is output from the processor for debugging or the like. The suspended device transitions to "waiting for pairing" in accordance with a RUN command from the processor.

The communication error illustrated in FIG. 3 is an example of a synchronization error. The communication error is an error related to packet transmission between the virtual controller 10 and the local apparatus 3. In an example, the communication error is classified into two types, namely the first level and the second level. The level of the communication error refers to an index indicating a severity degree of the communication error. The first level refers to a case that the severity of the communication error is a given degree, and the second level refers to a case that the severity is lower than the first level. The level of the communication error is used to classify the communication error.

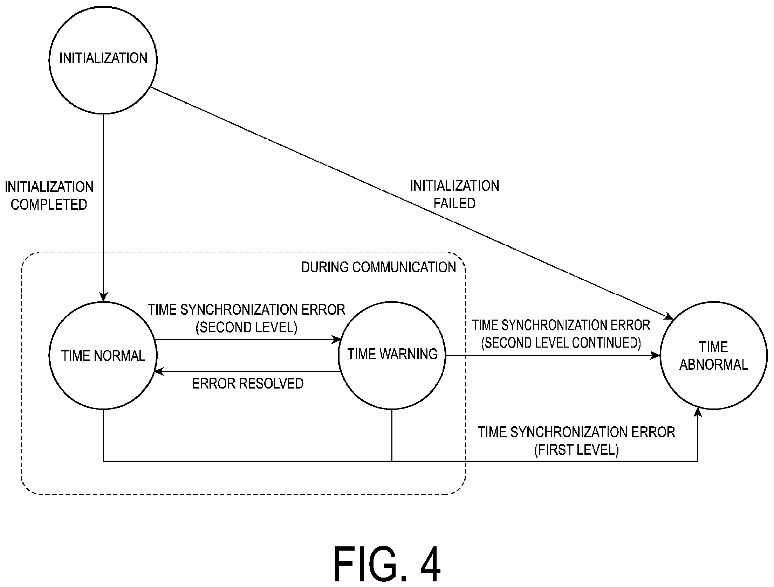

FIG. 4 illustrates state transition focusing on time synchronization between the virtual controller 10 and the local apparatus 3. In this example, when the initialization is completed, the state transitions from "initialization" to "time normal". When a time synchronization error of the first level occurs while the state is "time normal", the state transitions to "time abnormal". When a time synchronization error of the second level lower than the first level occurs in the "time normal" state, the state transitions to "time warning", and when the time synchronization error is resolved, the state returns to "time normal". While the state is "time warning", the state transitions to "time abnormal" when the time synchronization error of the first level occurs or the time synchronization error of the second level continues for a given time window. The time synchronization is assumed for normal processing of the apparatus control system 1. Therefore, when the apparatus control system 1 is in the "time abnormal" state, the apparatus control system 1 is not restored unless it is restarted, in consideration of ensuring safety. After the resolution of the time abnormal is determined, the entire apparatus control system 1 is restarted. The restarted apparatus control system 1 performs initialization of time synchronization, and returns to the "time normal" state only when the initialization succeeds.

The time synchronization error illustrated in FIG. 4 is an example of a synchronization error. The time synchronization error is an error related to time synchronization between the virtual controller 10 and the local apparatus 3. In an example, the time synchronization error is classified into two types, namely the first level and the second level. The level of the time synchronization error refers to an index indicating a severity degree of the time synchronization error. The first level refers to a case that the severity of the time synchronization error is a given degree, and the second level refers to a case that the severity is lower than the first level. The level of the time synchronization error is used to classify the time synchronization error.

### System Configuration

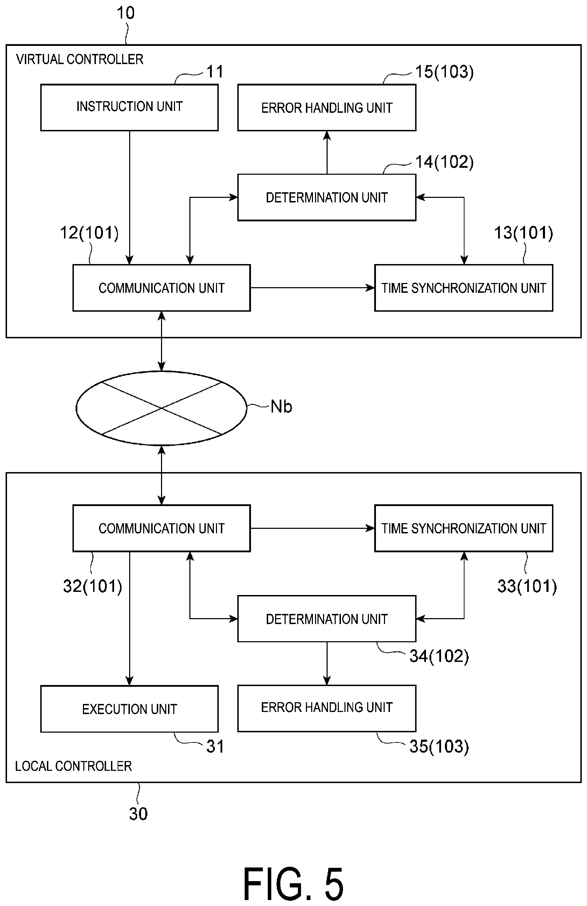

A functional configuration of the apparatus control system 1 for error handling will be described with reference to FIG. 5. FIG. 5 is a diagram illustrating an example of the functional configuration. In this example, the local controller 30 is illustrated as at least a part of the local apparatus 3. The apparatus control system 1 includes an acquisition unit 101, a determination unit 102, and an error handling unit 103 as functional modules. The acquisition unit 101 is a functional module that acquires communication data transmitted through the second communication network Nb (aperiodic communication) between the virtual controller 10 and the local controller 30. The determination unit 102 is a functional module that determines, based on the communication data, whether a synchronization error has occurred between the virtual controller 10 and the local apparatus 3. The error handling unit 103 is a functional module that performs error handling associated with at least one of the virtual controller 10 and the local apparatus 3 in a case that the synchronization error has occurred. The error handling unit 103 performs error handling corresponding to a communication error in a case that the communication error has occurred, and performs error handling corresponding to a time synchronization error in a case that the time synchronization error has occurred. In the example illustrated in FIG. 5, the acquisition unit 101, the determination unit 102, and the error handling unit 103 are implemented in both the virtual controller 10 and the local controller 30.

In an example, the virtual controller 10 includes an instruction unit 11, a communication unit 12, a time synchronization unit 13, a determination unit 14, and an error handling unit 15. The instruction unit 11 is a functional module that generates an instruction for controlling the local apparatus 3 and sets a processing time corresponding to the instruction. The communication unit 12 is a functional module that transmits and receives communication data to and from the local controller 30 via the second communication network Nb. As at least a part of this function, the communication unit 12 transmits the communication data indicating the instruction and the processing time to the local controller 30. The time synchronization unit 13 is a functional module that synchronizes a controller time indicated by a controller clock in the virtual controller 10 with a global time and generates the communication data for notifying the local controller 30 of the controller time. Each of the communication unit 12 and the time synchronization unit 13 is an example of the acquisition unit 101. The determination unit 14 and the error handling unit 15 are examples of the determination unit 102 and the error handling unit 103, respectively.

In an example, the local controller 30 includes an execution unit 31, a communication unit 32, a time synchronization unit 33, a determination unit 34, and an error handling unit 35. The execution unit 31 is a functional module that refers to the processing time indicated in the communication data and performs processing corresponding to the communication data at the processing time. The communication unit 32 is a functional module that transmits and receives the communication data to and from the virtual controller 10 via the second communication network Nb. As at least a part of this function, the communication unit 32 receives the communication data indicating the instruction and the processing time. The time synchronization unit 33 is a functional module that synchronizes a local time indicated by a local clock in the local controller 30 with the controller time. Each of the communication unit 32 and the time synchronization unit 33 is an example of the acquisition unit 101. The determination unit 34 and the error handling unit 35 are examples of the determination unit 102 and the error handling unit 103, respectively.

In an example, the virtual controller 10 repeatedly generates and transmits the communication data indicating the instruction and the processing time in cooperation with the instruction unit 11 and the communication unit 12. Whenever the local controller 30 receives the communication data in cooperation with the execution unit 31 and the communication unit 32, the local controller 30 performs the instruction at the specified processing time, based on the communication data.

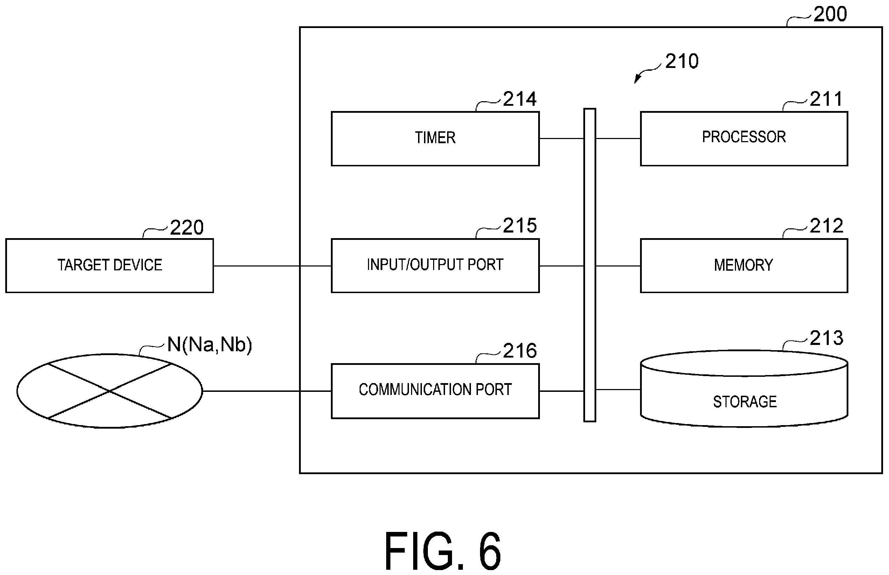

FIG. 6 is a diagram illustrating an example of a hardware configuration of a computer 200 used in the apparatus control system 1. For example, the virtual controller 10 and the local controller 30 are implemented using the computer 200.

The computer 200 includes a circuit 210. The circuit 210 includes a processor 211, a memory 212, a storage 213, a timer 214, an input/output port 215, and a communication port 216. The number of these respective hardware elements may be one or two or more. The storage 213 records a program for constituting each of the functional modules on the computer 200. The storage 213 is a computer-readable recording medium such as a hard disk, a nonvolatile semiconductor memory, a magnetic disk, or an optical disk. The memory 212 temporarily stores a program loaded from the storage 213, a calculation result by the processor 211, and the like. The processor 211 implements each functional module by executing the programs in cooperation with the memory 212. The input/output port 215 inputs and outputs an electric signal to and from a target device 220 such as an apparatus main body, a monitor, or an input device in accordance with an instruction from the processor 211. The input/output port 215 may also serve to supply power to the apparatus main body. The communication port 216 performs data communication with another device via a communication network N (for example, at least one of the first communication network Na and the second communication network Nb) in accordance with an instruction from the processor 211.

### System Operation

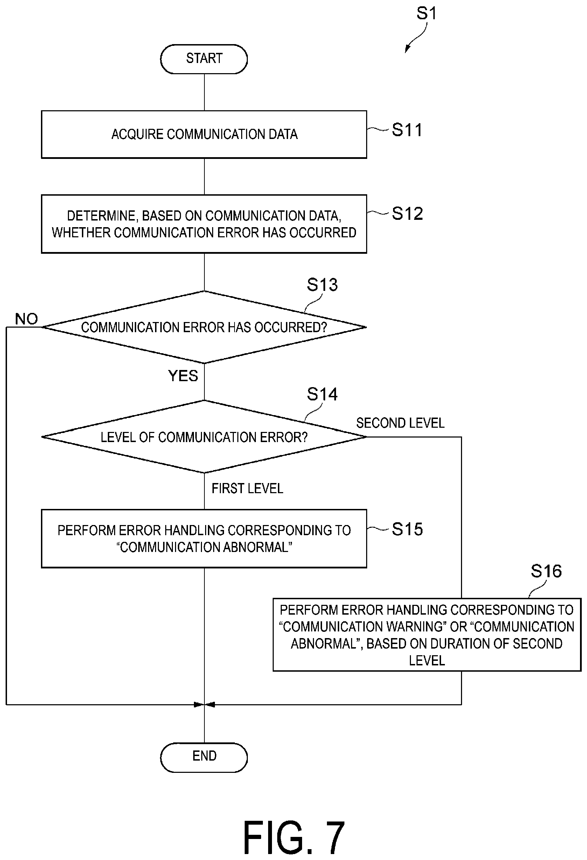

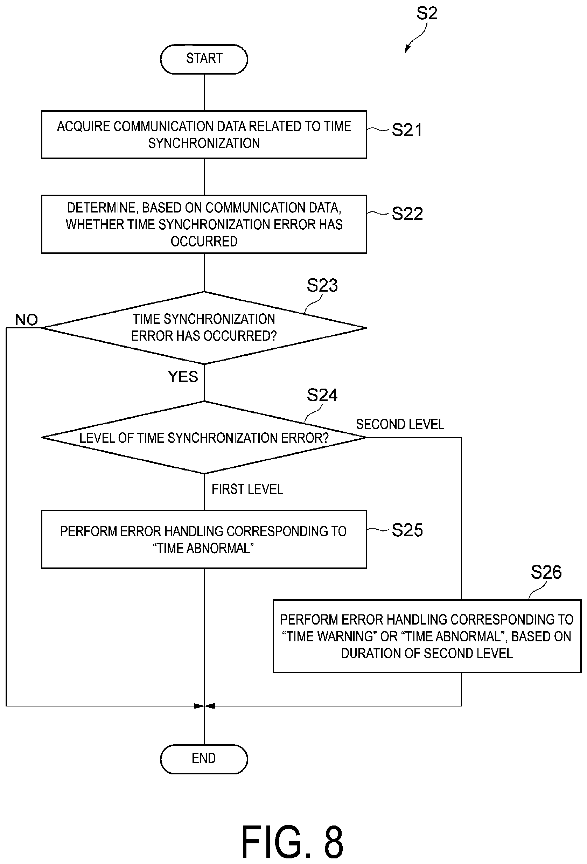

As an example of an apparatus control method according to the present disclosure, an example of an operation of the apparatus control system 1 will be described with reference to FIGS. 7 and 8. FIG. 7 is a flowchart illustrating, as a processing flow S1, an example of the operation of the apparatus control system 1 for the communication error. That is, in an example, the apparatus control system 1 performs the processing flow S1. FIG. 8 is a flowchart illustrating, as a processing flow S2, an example of the operation of the apparatus control system 1 for the time synchronization error. That is, in an example, the apparatus control system 1 performs the processing flow S2. Basically, the processing flows S1 and S2 are common to the virtual controller 10 and the local controller 30. Therefore, unless otherwise specified, the following description will be made as the processing by the acquisition unit 101, the determination unit 102, and the error handling unit 103.

### Processing for Communication Error

Processing for the communication error will be described with reference to FIG. 7. In step S11, the acquisition unit 101 acquires the communication data. The communication data may include a data item indicating an instruction or a response, may include a processing time, and/or may include a data item indicating information for time synchronization. In any case, the communication data includes a communication status indicating an order of packets in time series. The communication status may be represented by various values such as a counter value, a transmission time, and an opening time. Step S11 is performed by the communication unit 12 in the virtual controller 10 and is performed by the communication unit 32 in the local controller 30.

In step S12, the determination unit 102 determines, based on the communication data, whether a communication error has occurred. The determination unit 102 may perform the determination processing on the basis of the communication data for one communication period of the periodic communication or on the basis of a set of communication data accumulated over a plurality of communication periods of the periodic communication. For example, the determination unit 102 refers to the communication status of each of one or more packets and determines whether a communication error has occurred. In a case that no communication error has occurred (NO in step S13), no error handling is performed, and the apparatus control system 1 maintains the "communication normal" state. In a case that a communication error has occurred (YES in step S13), the process proceeds to step S14.

As illustrated in step S14, the subsequent processing of the apparatus control system 1 varies depending on a level of the communication error (that is, the type of the communication error). The determination unit 102 determines the level (type), and the error handling unit 103 performs the error handling in accordance with the determination.

Various examples related to the determination of the communication error will be described. In a case that an error has occurred in a watchdog timer that monitors communication data (packet transmission), the determination unit 102 may determine that the communication error is at the first level. The watchdog timer is a timer for periodically monitoring the operation of the computer. Alternatively, in a case that a delay or an order error has occurred in the packet indicating the communication data, the determination unit 102 may determine that the communication error is at the second level. The delay refers to a phenomenon in which reception of communication data (packet) is delayed from a given timing (scheduled timing) to an unacceptable degree. The order error refers to a phenomenon in which an order of arrival of a packet is changed from a specified order (for example, a phenomenon in which a second packet to be received after a first packet is received before the first packet).

In a case that the communication error is at the first level, the process proceeds to step S15. In step S15, the error handling unit 103 performs the error handling corresponding to "communication abnormal". For example, the error handling unit 103 may perform the error handling depending on the type of the local apparatus 3. As an example, the error handling unit 103 may stop a first type apparatus in a case that a communication error has occurred in the first type apparatus, and may allow a second type apparatus to continue to operate in a case that a communication error has occurred in the second type apparatus. In an example, the first type apparatus may be the local apparatus 3 for implementing a motion of the control target. In this case, the error handling unit 103 stops the control target (for example, the mobile robot 4, the stationary robot 5, the NC machine tool 6, or the conveyor 8) in the case that the communication error has occurred. In an example, the second type apparatus may be the local apparatus 3 including an input/output device. In this case, the error handling unit 103 allows the input/output device to continue to operate in the case that the communication error is at the first level.

In a case that the communication error of the first level has occurred in either of uplink communication or downlink communication of the second communication network Nb (aperiodic communication), either of the virtual controller 10 or the local controller 30 may play a central role in the error handling.

An example of the processing performed in the case that the communication error has occurred in the uplink communication will be described. In this example, the determination unit 14 and the error handling unit 15 in the virtual controller 10 play a central role in the error handling. The determination unit 14 determines, based on the communication data received by the communication unit 12, whether a communication error has occurred in the uplink communication. In a case that the communication error has occurred, the determination unit 14 further determines the level of the communication error. The reception of the communication data by the communication unit 12 corresponds to step S11, and the processing by the determination unit 14 based on the communication data corresponds to steps S12 to S14. In a case that the communication error is at the first level, the error handling unit 15 transmits a stop command to the first type apparatus via the downlink of the second communication network Nb (aperiodic communication). The stop command is an instruction for stopping the first type apparatus, and the transmission of the stop command corresponds to step S15. The first type apparatus receives the stop command and stops based on the stop command. For example, the local controller 30, which is an element of the first type apparatus, receives the stop command and stops the apparatus main body 20 in accordance with the stop command.

An example of the processing performed in the case that the communication error has occurred in the downlink communication will be described. In this example, the determination unit 34 and the error handling unit 35 in the local controller 30 of the first type apparatus play a central role in the error handling. The determination unit 34 determines, based on the communication data received by the communication unit 32, whether a communication error has occurred in the downlink communication. In a case that the communication error has occurred, the determination unit 34 further determines the level of the communication error. The reception of the communication data by the communication unit 32 corresponds to step S11, and the processing by the determination unit 34 based on the communication data corresponds to steps S12 to S14. In a case that the communication error is at the first level, the error handling unit 35 stops the apparatus main body 20 without executing an unexecuted instruction (command) received from the virtual controller 10. That is, the error handling unit 35 stops the first type apparatus in preference to the command from the virtual controller 10. This stopping corresponds to step S15.

After the error handling corresponding to "communication abnormal" is performed, in a case that the corresponding communication error is resolved, the error handling unit 103 may resume the pairing between the virtual controller 10 and the local apparatus 3 (for example, the local controller 30) in response to the communication error having been resolved. The error handling unit 103 may perform the re-pairing with being triggered by a user input or may automatically perform the re-pairing without receiving any user input. The pairing being resumed may cause the apparatus control system 1 to transition from the "communication abnormal" state to the "waiting for pairing" state and then return to the "communication normal" state.

In a case that the communication error is at the second level, the process proceeds to step S16. In step S16, the error handling unit 103 performs the error handling corresponding to "communication warning" or "communication abnormal", based on a duration of the second level. For example, the error handling unit 103 outputs a warning message corresponding to the communication error while maintaining the communication between the virtual controller 10 and the local apparatus 3. This is an example of the error handling corresponding to "communication warning". In this case, since the communication between the virtual controller 10 and the local apparatus 3 continues to be connected, transmission and reception of the communication data can also be continued. The error handling unit 103 may display the warning message on a display device, output the warning message from a speaker, or transmit the warning message to a given computer such as an administrator terminal. In a case that the communication error of the second level continues for a given time window, the error handling unit 103 may perform the error handling corresponding to "communication abnormal" (i.e., the process of step S15). For example, the error handling unit 103 performs the process of step S15 in a case that at least one of the delay and the order error of the communication data (packet transmission) continues for the time window.

### Processing for Time Synchronization Error

Processing for the time synchronization error will be described with reference to FIG. 8. In step S21, the acquisition unit 101 acquires the communication data related to the time synchronization. This communication data also includes the communication status. In an example, step S21 is performed by at least one of the communication unit 12 and the time synchronization unit 13 in the virtual controller 10, and is performed by at least one of the communication unit 32 and the time synchronization unit 33 in the local controller 30.

In step S22, the determination unit 102 determines, based on the communication data, whether a time synchronization error has occurred. The determination unit 102 may perform the determination processing based on the communication data for one communication period of the periodic communication or based on a set of communication data accumulated over a plurality of communication periods of the periodic communication. For example, the determination unit 102 refers to the communication status of each of one or more packets or a given message and determines whether a time synchronization error has occurred. In a case that no time synchronization error has occurred (NO in step S23), no error handling is performed, and the apparatus control system 1 maintains the "time normal" state. In a case that a time synchronization error has occurred (YES in step S23), the process proceeds to step S24.

As illustrated in step S24, the subsequent processing of the apparatus control system 1 varies depending on a level of the time synchronization error (i.e., the type of the time synchronization error). The determination unit 102 determines the level (type), and the error handling unit 103 performs the error handling in accordance with the determination.

Various examples related to the determination of the time synchronization error will be described. The determination unit 102 may determine that the time synchronization error is at the first level in a case that the reception of the communication data related to the time synchronization times out (i.e., in a case that a time during which the communication data is not received exceeds a given allowable time). Alternatively, the determination unit 102 may determine that the time synchronization error is at the first level in a case that initialization related to the time synchronization has failed. The determination unit 102 may determine that the time synchronization error is at the first level in a case that a time difference between the controller time of the virtual controller 10 and the local time of the local apparatus 3 is larger than a given threshold, and may determine that the time synchronization error is at the second level in a case that the time difference is within a numerical range not larger than the threshold (hereinafter, this numerical range is also referred to as a "warning range"). The lower limit of the warning range is larger than 0. Alternatively, the determination unit 102 may determine that the time synchronization error is at the second level in a case that a state of a protocol for time synchronization corresponds to a given abnormality.

In the case that the time synchronization error is at the first level, the process proceeds to step S25. In step S25, the error handling unit 103 performs the error handling corresponding to "time abnormal". in this case, the error handling unit 103 stops both the virtual controller 10 and the local apparatus 3. The error handling unit 103 may stop the virtual controller 10 and the local apparatus 3 so that a manual restart is necessary; and in an example, the error handling unit 15 stops the virtual controller 10 and the error handling unit 35 stops the local apparatus 3.

In the case that the time synchronization error is at the second level, the process proceeds to step S26. In step S26, the error handling unit 103 performs the error handling corresponding to "time warning" or "time abnormal", based on a duration of the second level. For example, the error handling unit 103 outputs a warning message corresponding to the determined time synchronization error while continuing the time synchronization between the virtual controller 10 and the local apparatus 3. Similarly to the case of the communication error, the warning message may be output in various ways. **In** a case that the time processing error of the second level continues for a given time window, the error handling unit 103 may perform the error handling corresponding to "time abnormal" (i.e., the process of step S25). For example, the error handling unit 103 performs the process of step S25 when a state where the time difference between the controller time and the local time is within the warning range continuously occurs over n periods (n represents an integer of 2 or larger).

In an example, both of the processing flows S1 and S2 are repeatedly performed in a given period. For example, the processing flow S1 may be repeatedly performed in accordance with the communication period of the periodic communication. The processing flow S2 may be repeatedly performed in accordance with the period of the time synchronization processing. The periods of the processing flows S1 and S2 may be different from each other or the same. The periods of the processing flows S1 and S2 may or may not be synchronized with each other.

As described above with respect to the processing flows S1 and S2, the error handling unit 103 may perform the error handling differently between the case that a communication error has occurred and the case that a time synchronization error has occurred. In a case that the determination unit 102 further determines the level of the synchronization error, the error handling unit 103 operates depending on the level. In an example, the error handling unit 103 performs the error handling corresponding to the first level in the case the synchronization error is at the first level. In an example, the error handling unit outputs a warning message corresponding to the synchronization error while continuing the synchronization, in the case that the synchronization error is at the second level. The error handling unit 103 may perform the error handling corresponding to the first level in response to the second level continuing for a given time window. As described above, the apparatus control system 1 performs the appropriate error handling for each synchronization error depending on the situation.

### Program

Each functional module in the apparatus control system 1 is implemented by loading an apparatus control program on the processor 211 or the memory 212 and causing the processor 211 to execute the program. The apparatus control program includes a code for implementing each functional module in the apparatus control system 1. The processor 211 operates the input/output port 215 or the communication port 216 in accordance with the apparatus control program, and performs reading and writing of data from and to the memory 212 or the storage 213. Each functional module in the apparatus control system 1 is implemented by such processing.

The apparatus control program may be provided by being fixedly recorded on a non-transitory recording medium such as a CD-ROM, a DVD-ROM, or a semiconductor memory. Alternatively, the apparatus control program may be provided as a data signal superimposed on a carrier wave via a communication network.

### Effect

As described above, an apparatus control system according to an aspect of the present disclosure includes: an acquisition unit configured to acquire communication data transmitted through aperiodic communication between a local apparatus and a controller configured to control the local apparatus; a determination unit configured to determine, based on the communication data, whether a synchronization error has occurred that is an error related to synchronization between the local apparatus and the controller; and an error handling unit configured to perform error handling associated with at least one of the local apparatus and the controller when the synchronization error has occurred.

An apparatus control method according to an aspect of the present disclosure includes: acquiring communication data transmitted through aperiodic communication between a local apparatus and a controller configured to control the local apparatus; determining, based on the communication data, whether a synchronization error has occurred that is an error related to synchronization between the local apparatus and the controller; and performing error handling associated with at least one of the local apparatus and the controller when the synchronization error has occurred.

An apparatus control program according to an aspect of the present disclosure causes a computer system to execute: acquiring communication data transmitted through aperiodic communication between a local apparatus and a controller configured to control the local apparatus; determining, based on the communication data, whether a synchronization error has occurred that is an error related to synchronization between the local apparatus and the controller; and performing error handling associated with at least one of the local apparatus and the controller when the synchronization error has occurred.

In such an aspect, since the error handling is performed when the synchronization error has occurred in the apparatus control system using the aperiodic communication, the safety of the synchronization processing using the aperiodic communication can be ensured.

In the apparatus control system according to another aspect, the controller may repeatedly perform the first processing and the local apparatus may repeatedly perform the second processing. The controller may include a transmission unit configured to transmit, to the local apparatus through the aperiodic communication as at least a part of the first processing, the communication data indicating a processing time based on a controller time of the controller based on time synchronization between the controller and the local apparatus. The local apparatus may include an execution unit configured to refer to the processing time indicated in the transmitted communication data and perform processing corresponding to the communication data at the processing time as at least a part of the second processing. In this case, an execution timing for the processing in the local apparatus is set by the processing time based on the controller time, and the periodic communication is implemented. In such an apparatus control system, the error handling is performed when a synchronization error has occurred. Therefore, it is possible to ensure the safety of the synchronization processing in the apparatus control system that implements the periodic communication in the aperiodic communication.

In the apparatus control system according to another aspect, the synchronization error may include a time synchronization error being an error related to time synchronization between the controller and the local apparatus, and the error handling unit may perform the error handling corresponding to the time synchronization error when the time synchronization error has occurred. Since the time synchronization error that may occur by using the aperiodic communication is determined, the error handling can be appropriately performed in a case that the time synchronization is difficult.

In the apparatus control system according to another aspect, the synchronization error may further include a communication error being an error related to packet transmission between the controller and the local apparatus. The error handling unit may perform the error handling differently between when the communication error has occurred and when the time synchronization error has occurred. In the apparatus control system using the aperiodic communication, the time synchronization error and the communication error are essentially different errors. By varying the error handling depending on each of these two types of errors, the safety of the apparatus control system can be enhanced.

In the apparatus control system according to the present invention, the error handling unit stops the local apparatus and the controller when the time synchronization error has occurred. By stopping the apparatus control system in the case of the time synchronization error, the safety of the system can be further enhanced.

In the apparatus control system according to another aspect, the error handling unit may stop the local apparatus and the controller so that a manual restart is necessary. The time synchronization that is important in the apparatus control system is desirably resumed when reliable recovery is determined. With this mechanism, the safety of the apparatus control system can be sufficiently ensured.

In the apparatus control system according to another aspect, the error handling unit may stop the local apparatus and the controller when reception of the communication data related to the time synchronization has timed out. The failure to receive the data related to the time synchronization can be regarded as a severe error. By stopping the apparatus control system in the case of such an error, the safety of the apparatus control system can be appropriately ensured.

In the apparatus control system according to another aspect, the error handling unit may stop the local apparatus and the controller when initialization related to the time synchronization fails. The failure in the initialization of the time synchronization means that the time synchronization is impossible, and thus, can be regarded as a severe error. By stopping the system in the case of such an error, the safety of the apparatus control system can be appropriately ensured.

In the apparatus control system according to another aspect, the error handling unit may stop the local apparatus and the controller when a time difference between a controller time of the controller and a local time of the local apparatus is larger than a given threshold. By stopping the system in the case that the time difference affecting the time synchronization exceeds a given criterion, the safety of the apparatus control system can be appropriately ensured.

In the apparatus control system according to another aspect, the error handling unit may perform the error handling depending on the type of the local apparatus when the communication error has occurred. By performing the error handling depending on the type of the local apparatus, the safety of the apparatus control system can be appropriately ensured depending on a situation of the error.

In the apparatus control system according to another aspect, the local apparatus may include a first type apparatus and a second type apparatus. The error handling unit may stop the first type apparatus when the communication error has occurred in the first type apparatus, and may allow the second type apparatus to continue to operate when the communication error has occurred in the second type apparatus. By performing the error handling differently depending on the type of the local apparatus in this way, flexible error handling in accordance with the situation is possible.

In the apparatus control system according to another aspect, the first type apparatus may be an apparatus for implementing a motion of a control target. The error handling unit may stop the first type apparatus so that the motion does not occur, when the communication error has occurred. By stopping the motion that may have an unintended influence on the surroundings, the safety of the apparatus control system can be reliably ensured.

In the apparatus control system according to another aspect, the determination unit and the error handling unit may be implemented in the controller. The determination unit may determine whether the communication error has occurred in uplink communication of the aperiodic communication, the error handling unit may transmit a stop command to the first type apparatus via downlink communication of the aperiodic communication when the communication error has occurred, and the first type apparatus may stop in response to the stop command. By transmitting the stop command to the first type apparatus using the downlink communication when the communication error has occurred in an uplink communication direction, the first type apparatus can be reliably stopped.

In the apparatus control system according to another aspect, the determination unit and the error handling unit may be implemented in the first type apparatus. The determination unit may determine whether the communication error has occurred in downlink communication of the aperiodic communication, and the error handling unit may stop the first type apparatus in preference to a command from the controller when the communication error has occurred. With this mechanism, by causing the first type apparatus to autonomously stop when the communication error has occurred in a downstream communication direction, the first type apparatus can be reliably stopped.

In the apparatus control system according to another aspect, the second type apparatus may include an input/output device. The error handling unit may cause the input/output device to continue to operate when the communication error has occurred. In this case, it is possible to cause the input/output device to continue to operate without giving an unnecessary instruction to the input/output device which does not have an unintended influence on the surroundings even in the case of the communication error.

In the apparatus control system according to another aspect, the error handling unit may perform the error handling depending on the type of the local apparatus, when a delay of the packet transmission continues for a given time window. With this mechanism, the safety of the apparatus control system can be appropriately ensured against a long delay in the packet transmission.

In the apparatus control system according to another aspect, the error handling unit may perform the error handling depending on the type of the local apparatus, when an error has occurred in a watchdog timer configured to monitor the packet transmission. In this case, the safety of the system can be appropriately ensured against the error in the watchdog timer.

In the apparatus control system according to another aspect, the error handling unit may resume pairing between the controller and the local apparatus in response to resolving the communication error, as at least a part of the error handling. With this mechanism, the controller and the local apparatus can be reconnected when the communication error has been resolved.

In the apparatus control system according to another aspect, the determination unit may further determine a level of the synchronization error. The error handling unit may perform the error handling when the synchronization error is at a first level, and may perform, when the synchronization error is at a second level lower than the first level, the error handling in response to the second level continuing for a given time window. When the level of the synchronization error is relatively low, the error handling is performed based on a duration of the situation, and therefore, it is possible to balance the safety and the operation of the management of the apparatus control system.

In the apparatus control system according to another aspect, the error handling unit may output a warning message corresponding to the synchronization error while continuing the synchronization, when the synchronization error is at the second level. By outputting the warning message while maintaining the synchronization when the error level is relatively low, a sign of the error can be notified before a severe error occurs in the apparatus control system.

In the apparatus control system according to another aspect, at least a part of the aperiodic communication may be configured by a mobile communication system. In this case, the safety of the synchronization processing can be ensured in the mechanism in which the mobile communication system is used for the aperiodic communication.

In the apparatus control system according to another aspect, the controller may be a virtual controller implemented on a server. In this case, the safety of the synchronization processing can be ensured in the mechanism in which the controller is virtualized.

### [Variation]

The embodiment of the present disclosure is described in detail above.

The host controller in the apparatus control system need not be a virtual controller but may be a device having a dedicated hardware configuration.

In the present disclosure, it can be said that the level of the synchronization error is convenient information for classifying the synchronization error. The apparatus control system may perform the error handling depending on the type of the synchronization error without using the level.

In the above example, the virtual controller 10 or the local controller 30 includes the functional modules for error handling. In addition to or instead of this, a communication device or a computer constituting an inside of the second communication network Nb may include the functional modules. For example, the communication device or the computer may include at least one of the acquisition unit, the determination unit, and the error handling unit.

The hardware configuration of the system is not limited to an aspect in which each functional module is implemented by executing a program. For example, at least a part of the functional modules in the above embodiment may be constituted by a logic circuit dedicated to the function or an application specific integrated circuit (ASIC) integrating the logic circuit.

The processing procedure of the method performed by at least one processor is not limited to the example in the above embodiment. For example, some of the steps (processes) described above may be omitted, or the steps may be performed in a different order. Any two or more of the above-described steps may be combined, or some of the steps may be modified or deleted. Alternatively, other steps may be performed in addition to the above-described steps.

When two numerical values are compared in terms of the magnitude relationship in a computer system or a computer, any of two criteria of "equal to or more than" and "more than" may be used, and any of two criteria of "equal to or less than" and "less than" may be used. The selection of such a criterion does not change the technical significance of the processing of comparing two numerical values in terms of the magnitude relationship.

### REFERENCE SIGNS LIST

1 Apparatus control system, 2 Controller server, 3 Local apparatus, 9 Time server, 10 Virtual controller, 11 Instruction unit, 12 Communication unit (acquisition unit), 13 Time synchronization unit (acquisition unit), 14 Determination unit, 15 Error handling unit, 20 Apparatus main body, 30 Local Controller, 31 Execution unit, 32 Communication unit (acquisition unit), 33 Time synchronization unit (acquisition unit), 34 Determination unit, 35 Error handling unit, 101 Acquisition unit, 102 Determination unit, 103 Error handling unit, Na First communication network, Nb Second communication network

## Claims

1. An apparatus control system (1) comprising:
an acquisition unit (101) configured to acquire communication data transmitted through aperiodic communication between a local apparatus (3) and a controller configured to control the local apparatus (3);
a determination unit (102) configured to determine, based on the acquired communication data, whether a synchronization error has occurred that is an error related to synchronization between the local apparatus (3) and the controller; and
an error handling unit (103) configured to perform error handling associated with at least one of the local apparatus (3) and the controller when the synchronization error has occurred, wherein
the synchronization error includes a time synchronization error being an error related to time synchronization between the controller and the local apparatus (3), **characterised in that**
the error handling unit (103) is configured such that it, as error handling, stops the local apparatus (3) and the controller when the time synchronization error has occurred.

2. The apparatus control system (1) according to claim 1, wherein
the controller is configured such that it repeatedly performs first processing,
the local apparatus (3) is configured such that it repeatedly performs second processing,
the controller includes a transmission unit configured to transmit, to the local apparatus (3) through the aperiodic communication as at least a part of the first processing, the communication data indicating a processing time based on a controller time of the controller based on time synchronization between the controller and the local apparatus (3), and
the local apparatus (3) includes an execution unit (31) configured to refer to the processing time indicated by the communication data transmitted and perform processing corresponding to the communication data at the processing time as at least a part of the second processing.

3. The apparatus control system (1) according to claim 1 or 2, wherein
the synchronization error further includes a communication error being an error related to packet transmission between the controller and the local apparatus (3), and
the error handling unit (103) is configured such that it performs the error handling differently between when the communication error has occurred and when the time synchronization error has occurred.

4. The apparatus control system (1) according to any of claims 1 to 3, wherein
the error handling unit (103) is configured such that it performs the error handling depending on a type of the local apparatus (3) when the communication error has occurred.

5. The apparatus control system (1) according to claim 4, wherein
the local apparatus (3) includes a first type apparatus and a second type apparatus, and
the error handling unit (103) is configured such that it:
stops the first type apparatus when the communication error has occurred in the first type apparatus; and
causes the second type apparatus to continue to operate when the communication error has occurred in the second type apparatus.

6. The apparatus control system (1) according to claim 5, wherein
the first type apparatus is an apparatus configured to implement a motion of a control target, and
the error handling unit (103) is configured such that it stops the first type apparatus so that the motion does not occur when the communication error has occurred.

7. The apparatus control system (1) according to claim 5 or 6, wherein
the determination unit (102) and the error handling unit (103) are implemented in the controller,
the determination unit (102) is configured such that it determines whether the communication error has occurred in uplink communication of the aperiodic communication,
the error handling unit (103) is configured such that it transmits a stop command to the first type apparatus via downlink communication of the aperiodic communication when the communication error has occurred, and
the first type apparatus stops in response to the stop command.

8. The apparatus control system (1) according to claim 5 or 6, wherein
the determination unit (102) and the error handling unit (103) are implemented in the first type apparatus,
the determination unit (102) is configured such that it determines whether the communication error has occurred in downlink communication of the aperiodic communication, and
the error handling unit (103) is configured such that it stops the first type apparatus in preference to a command from the controller when the communication error has occurred.

9. The apparatus control system (1) according to claim 5 or 8, wherein
the second type apparatus includes an input/output device (7), and
the error handling unit (103) is configured such that it causes the input/output device (7) to continue to operate when the communication error has occurred.

10. The apparatus control system (1) according to claim 4 or 9, wherein the error handling unit (103) is configured such that it resumes pairing between the controller and the local apparatus (3) in response to resolving the communication error, as at least a part of the error handling.

11. The apparatus control system (1) according to any one of claims 1 to 10, wherein
the determination unit (102) is configured such that it further determines a level of the synchronization error, and
the error handling unit (103) is configured such that it:
performs the error handling when the synchronization error is at a first level; and
performs, when the synchronization error is at a second level lower than the first level, the error handling in response to the second level continuing for a given time window.

12. The apparatus control system (1) according to claim 11, wherein the error handling unit (103) is configured such that it outputs a warning message corresponding to the synchronization error while continuing the synchronization, when the synchronization error is at the second level.

13. The apparatus control system (1) according to any one of claims 1 to 12, wherein at least a part of the aperiodic communication is configured by a mobile communication system.

14. An apparatus control method comprising:
acquiring communication data transmitted through aperiodic communication between a local apparatus (3) and a controller configured to control the local apparatus (3);
determining, based on the acquired communication data, whether a synchronization error has occurred that is an error related to synchronization between the local apparatus (3) and the controller; and
performing error handling associated with at least one of the local apparatus (3) and the controller when the synchronization error has occurred, wherein
the synchronization error includes a time synchronization error being an error related to time synchronization between the controller and the local apparatus (3), **characterised in that**, as error handling, the local apparatus (3) and the controller are stopped when the time synchronization error has occurred.

## Patentansprüche

1. Einrichtungssteuersystem (1), umfassend:
eine Erhebungseinheit (101), die dazu konfiguriert ist, Kommunikationsdaten zu erheben, die durch aperiodische Kommunikation zwischen einer lokalen Einrichtung (3) und einer Steuereinheit übertragen werden, die dazu konfiguriert ist, die lokale Einrichtung (3) zu steuern;
eine Bestimmungseinheit (102), die dazu konfiguriert ist, basierend auf den erhobenen Kommunikationsdaten zu bestimmen, ob ein Synchronisierungsfehler aufgetreten ist, der ein Fehler bezüglich Synchronisierung zwischen der lokalen Einrichtung (3) und der Steuereinheit ist; und
eine Fehlerbehandlungseinheit (103), die dazu konfiguriert ist, Fehlerbehandlung durchzuführen, die der mindestens einen der lokalen Einrichtung (3) und der Steuereinheit zugeordnet ist, wenn der Synchronisierungsfehler aufgetreten ist, wobei
der Synchronisierungsfehler einen Zeitsynchronisierungsfehler beinhaltet, der ein Fehler bezüglich Zeitsynchronisierung zwischen der Steuereinheit und der lokalen Einrichtung (3) ist, **dadurch gekennzeichnet, dass** die Fehlerbehandlungseinheit (103) derart konfiguriert ist, dass sie als Fehlerbehandlung die lokale Einrichtung (3) und die Steuereinheit stoppt, wenn der Zeitsynchronisierungsfehler aufgetreten ist.

2. Einrichtungssteuersystem (1) nach Anspruch 1, wobei
die Steuereinheit derart konfiguriert ist, dass sie wiederholt erste Verarbeitung durchführt,
die lokale Einrichtung (3) derart konfiguriert ist, dass sie wiederholt zweite Verarbeitung durchführt,
die Steuereinheit eine Übertragungseinheit beinhaltet, die dazu konfiguriert ist, der lokalen Einrichtung (3) durch die aperiodische Kommunikation als mindestens einen Teil der ersten Verarbeitung die Kommunikationsdaten zu übertragen, die einen Verarbeitungszeitpunkt basierend auf einer Steuereinheitenzeit der Steuereinheit basierend auf Zeitsynchronisierung zwischen der Steuereinheit und der lokalen Einrichtung (3) angeben, und
die lokale Einrichtung (3) eine Ausführungseinheit (31) beinhaltet, die dazu konfiguriert ist, sich auf den durch die übertragenen Kommunikationsdaten angegebenen Verarbeitungszeitpunkt zu beziehen und Verarbeitung entsprechend den Kommunikationsdaten zu dem Verarbeitungszeitpunkt als mindestens einen Teil der zweiten Verarbeitung durchzuführen.

3. Einrichtungssteuersystem (1) nach Anspruch 1 oder 2, wobei
der Synchronisierungsfehler weiter einen Kommunikationsfehler beinhaltet, der ein Fehler bezüglich Paketübertragung zwischen der Steuereinheit und der lokalen Einrichtung (3) ist, und
die Fehlerbehandlungseinheit (103) derart konfiguriert ist, dass sie die Fehlerbehandlung unterschiedlich dazu durchführt, wenn der Kommunikationsfehler aufgetreten ist, als wenn der Zeitsynchronisierungsfehler aufgetreten ist.

4. Einrichtungssteuersystem (1) nach einem der Ansprüche 1 bis 3, wobei
die Fehlerbehandlungseinheit (103) derart konfiguriert ist, dass sie die Fehlerbehandlung abhängig von einem Typ der lokalen Einrichtung (3) durchführt, wenn der Kommunikationsfehler aufgetreten ist.

5. Einrichtungssteuersystem (1) nach Anspruch 4, wobei
die lokale Einrichtung (3) eine Einrichtung eines ersten Typs und eine Einrichtung eines zweiten Typs beinhaltet, und
die Fehlerbehandlungseinheit (103) derart konfiguriert ist, dass sie:
die Einrichtung des ersten Typs stoppt, wenn der Kommunikationsfehler in der Einrichtung des ersten Typs aufgetreten ist; und
veranlasst, dass die Einrichtung des zweiten Typs weiterarbeitet, wenn der Kommunikationsfehler in der Einrichtung des zweiten Typs aufgetreten ist.

6. Einrichtungssteuersystem (1) nach Anspruch 5, wobei
die Einrichtung des ersten Typs eine Einrichtung ist, die dazu konfiguriert ist, eine Bewegung eines Steuerziels zu implementieren, und
die Fehlerbehandlungseinheit (103) derart konfiguriert ist, dass sie die Einrichtung des ersten Typs stoppt, sodass die Bewegung nicht auftritt, wenn der Kommunikationsfehler aufgetreten ist.

7. Einrichtungssteuersystem (1) nach Anspruch 5 oder 6, wobei
die Bestimmungseinheit (102) und die Fehlerbehandlungseinheit (103) in der Steuereinheit implementiert sind,
die Bestimmungseinheit (102) derart konfiguriert ist, dass sie bestimmt, ob der Kommunikationsfehler in Uplink-Kommunikation der aperiodischen Kommunikation aufgetreten ist,
die Fehlerbehandlungseinheit (103) derart konfiguriert ist, dass sie einen Stoppbefehl über Downlink-Kommunikation der aperiodischen Kommunikation an die Einrichtung des ersten Typs überträgt, wenn der Kommunikationsfehler aufgetreten ist, und
die Einrichtung des ersten Typs als Reaktion auf den Stoppbefehl stoppt.

8. Einrichtungssteuersystem (1) nach Anspruch 5 oder 6, wobei
die Bestimmungseinheit (102) und die Fehlerbehandlungseinheit (103) in der Einrichtung des ersten Typs implementiert sind,
die Bestimmungseinheit (102) derart konfiguriert ist, dass sie bestimmt, ob der Kommunikationsfehler in Downlink-Kommunikation der aperiodischen Kommunikation aufgetreten ist, und
die Fehlerbehandlungseinheit (103) derart konfiguriert ist, dass sie die Einrichtung des ersten Typs bevorzugt vor einem Befehl von der Steuereinheit stoppt, wenn der Kommunikationsfehler aufgetreten ist.

9. Einrichtungssteuersystem (1) nach Anspruch 5 oder 8, wobei
die Einrichtung des zweiten Typs eine Eingabe/Ausgabe-Vorrichtung (7) beinhaltet, und
die Fehlerbehandlungseinheit (103) derart konfiguriert ist, dass sie die Eingabe/Ausgabe-Vorrichtung (7) veranlasst, weiterzuarbeiten, wenn der Kommunikationsfehler aufgetreten ist.

10. Einrichtungssteuersystem (1) nach Anspruch 4 oder 9, wobei die Fehlerbehandlungseinheit (103) derart konfiguriert ist, dass sie als Reaktion auf das Beheben des Kommunikationsfehlers als mindestens einen Teil der Fehlerbehandlung das Koppeln zwischen der Steuereinheit und der lokalen Einrichtung (3) wieder aufnimmt.

11. Einrichtungssteuersystem (1) nach einem der Ansprüche 1 bis 10, wobei
die Bestimmungseinheit (102) derart konfiguriert ist, dass sie weiter eine Stufe des Synchronisierungsfehlers bestimmt, und
die Fehlerbehandlungseinheit (103) derart konfiguriert ist, dass sie:
die Fehlerbehandlung durchführt, wenn der Synchronisierungsfehler auf einer ersten Stufe liegt; und
wenn der Synchronisierungsfehler auf einer zweiten Stufe liegt, die niedriger ist als die erste Stufe, die Fehlerbehandlung als Reaktion auf die zweite Stufe über ein gegebenes Zeitfenster weiter durchführt.

12. Einrichtungssteuersystem (1) nach Anspruch 11, wobei die Fehlerbehandlungseinheit (103) derart konfiguriert ist, dass sie eine dem Synchronisierungsfehler entsprechende Warnmeldung ausgibt, während sie die Synchronisierung fortsetzt, wenn der Synchronisierungsfehler auf der zweiten Stufe liegt.

13. Einrichtungssteuersystem (1) nach einem der Ansprüche 1 bis 12, wobei mindestens ein Teil der aperiodischen Kommunikation durch ein mobiles Kommunikationssystem konfiguriert wird.

14. Einrichtungsteuerverfahren, das Folgendes umfasst:
Erheben von Kommunikationsdaten, die durch aperiodische Kommunikation zwischen einer lokalen Einrichtung (3) und einer Steuereinheit übertragen werden, die dazu konfiguriert ist, die lokale Einrichtung (3) zu steuern;
Bestimmen, basierend auf den erhobenen Kommunikationsdaten, ob ein Synchronisierungsfehler aufgetreten ist, der ein Fehler bezüglich Synchronisierung zwischen der lokalen Einrichtung (3) und der Steuereinheit ist; und
Durchführen von Fehlerbehandlung, die der mindestens einen der lokalen Einrichtung (3) und der Steuereinheit zugeordnet ist, wenn der Synchronisierungsfehler aufgetreten ist, wobei
der Synchronisierungsfehler einen Zeitsynchronisierungsfehler beinhaltet, der ein Fehler bezüglich Zeitsynchronisierung zwischen der Steuereinheit und der lokalen Einrichtung (3) ist, **dadurch gekennzeichnet, dass** als Fehlerbehandlung die lokale Einrichtung (3) und die Steuereinheit gestoppt werden, wenn der Zeitsynchronisierungsfehler aufgetreten ist.

## Revendications

1. Système de commande d'appareil (1), comprenant :
une unité d'acquisition (101) configurée pour acquérir des données de communication transmises au moyen d'une communication apériodique entre un appareil local (3) et un dispositif de commande configuré pour commander l'appareil local (3) ;
une unité de détermination (102) configurée pour déterminer, sur la base des données de communication acquises, si une erreur de synchronisation est survenue, qui est une erreur liée à une synchronisation entre l'appareil local (3) et le dispositif de commande ; et
une unité de traitement d'erreur (103) configurée pour effectuer un traitement d'erreur associé à au moins un de l'appareil local (3) et du dispositif de commande lorsque l'erreur de synchronisation est survenue, dans lequel
l'erreur de synchronisation inclut une erreur de synchronisation temporelle qui est une erreur liée à une synchronisation temporelle entre le dispositif de commande et l'appareil local (3), **caractérisé en ce que** l'unité de traitement d'erreur (103) est configurée de telle sorte qu'elle arrête, en tant que traitement d'erreur, l'appareil local (3) et le dispositif de commande lorsque l'erreur de synchronisation temporelle est survenue.

2. Système de commande d'appareil (1) selon la revendication 1, dans lequel
le dispositif de commande est configuré de telle sorte qu'il effectue de manière répétée un premier traitement,
l'appareil local (3) est configuré de telle sorte qu'il effectue de manière répétée un second traitement,
le dispositif de commande inclut une unité de transmission configurée pour transmettre, à l'appareil local (3) au moyen de la communication apériodique en tant qu'au moins une partie du premier traitement, les données de communication indiquant un temps de traitement basé sur un temps de dispositif de commande du dispositif de commande basé sur une synchronisation temporelle entre le dispositif de commande et l'appareil local (3), et
l'appareil local (3) inclut une unité d'exécution (31) configurée pour se référer au temps de traitement indiqué par les données de communication transmises et effectuer un traitement correspondant aux données de communication au temps de traitement en tant qu'au moins une partie du second traitement.

3. Système de commande d'appareil (1) selon la revendication 1 ou 2, dans lequel
l'erreur de synchronisation inclut en outre une erreur de communication qui est une erreur liée à la transmission de paquets entre le dispositif de commande et l'appareil local (3), et
l'unité de traitement d'erreur (103) est configurée de telle sorte qu'elle effectue le traitement d'erreur différemment entre le moment où l'erreur de communication est survenue, et le moment où l'erreur de synchronisation temporelle est survenue.

4. Système de commande d'appareil (1) selon l'une quelconque des revendications 1 à 3, dans lequel
l'unité de traitement d'erreur (103) est configurée de telle sorte qu'elle effectue le traitement d'erreur en fonction d'un type de l'appareil local (3) lorsque l'erreur de communication est survenue.

5. Système de commande d'appareil (1) selon la revendication 4, dans lequel
l'appareil local (3) inclut un appareil de premier type et un appareil de second type, et
l'unité de traitement d'erreur (103) est configurée de telle sorte qu'elle :
arrête l'appareil de premier type lorsque l'erreur de communication est survenue dans l'appareil de premier type ; et
amène l'appareil de second type à continuer de fonctionner lorsque l'erreur de communication est survenue dans l'appareil de second type.

6. Système de commande d'appareil (1) selon la revendication 5, dans lequel
l'appareil de premier type est un appareil configuré pour mettre en œuvre un mouvement d'une cible de commande, et
l'unité de traitement d'erreur (103) est configurée de telle sorte qu'elle arrête l'appareil de premier type de telle sorte que le mouvement ne survienne pas lorsque l'erreur de communication est survenue.

7. Système de commande d'appareil (1) selon la revendication 5 ou 6, dans lequel
l'unité de détermination (102) et l'unité de traitement d'erreur (103) sont mises en œuvre dans le dispositif de commande,
l'unité de détermination (102) est configurée de telle sorte qu'elle détermine si l'erreur de communication est survenue dans une communication de liaison montante de la communication apériodique,
l'unité de traitement d'erreur (103) est configurée de telle sorte qu'elle transmette une instruction d'arrêt à l'appareil de premier type via une communication de liaison descendante de la communication apériodique lorsque l'erreur de communication est survenue, et
l'appareil de premier type s'arrête à la suite de l'instruction d'arrêt.

8. Système de commande d'appareil (1) selon la revendication 5 ou 6, dans lequel
l'unité de détermination (102) et l'unité de traitement d'erreur (103) sont mises en œuvre dans l'appareil de premier type,
l'unité de détermination (102) est configurée de telle sorte qu'elle détermine si l'erreur de communication est survenue dans une communication de liaison descendante de la communication apériodique, et
l'unité de traitement d'erreur (103) est configurée de telle sorte qu'elle arrête l'appareil de premier type de préférence suite à une instruction du dispositif de commande lorsque l'erreur de communication est survenue.

9. Système de commande d'appareil (1) selon la revendication 5 ou 8, dans lequel
l'appareil de second type comprend un dispositif d'entrée/de sortie (7), et
l'unité de traitement d'erreur (103) est configurée de telle sorte qu'elle amène le dispositif d'entrée/de sortie (7) à continuer de fonctionner lorsque l'erreur de communication est survenue.

10. Système de commande d'appareil (1) selon la revendication 4 ou 9, dans lequel l'unité de traitement d'erreur (103) est configurée de telle sorte qu'elle reprenne l'appariement entre le dispositif de commande et l'appareil local (3) à la suite de la résolution de l'erreur de communication, en tant qu'au moins une partie du traitement d'erreur.

11. Système de commande d'appareil (1) selon l'une quelconque des revendications 1 à 10, dans lequel
l'unité de détermination (102) est configurée de telle sorte qu'elle détermine en outre un niveau de l'erreur de synchronisation, et
l'unité de traitement d'erreur (103) est configurée de telle sorte qu'elle :
effectue le traitement d'erreur lorsque l'erreur de synchronisation est à un premier niveau ; et
effectue, lorsque l'erreur de synchronisation est à un second niveau inférieur au premier niveau, le traitement d'erreur en réponse au second niveau se poursuivant pendant une fenêtre temporelle donnée.

12. Système de commande d'appareil (1) selon la revendication 11, dans lequel l'unité de traitement d'erreur (103) est configurée de telle sorte qu'elle délivre en sortie un message d'avertissement correspondant à l'erreur de synchronisation tout en poursuivant la synchronisation, lorsque l'erreur de synchronisation est au second niveau.

13. Système de commande d'appareil (1) selon l'une quelconque des revendications 1 à 12, dans lequel au moins une partie de la communication apériodique est configurée par un système de communication mobile.

14. Procédé de commande d'appareil, comprenant :
l'acquisition de données de communication transmises au moyen d'une communication apériodique entre un appareil local (3) et un dispositif de commande configuré pour commander l'appareil local (3) ;
la détermination, sur la base des données de communication acquises, pour savoir si une erreur de synchronisation est survenue, qui est une erreur liée à une synchronisation entre l'appareil local (3) et le dispositif de commande ; et
la réalisation d'un traitement d'erreur associé à au moins un de l'appareil local (3) et du dispositif de commande lorsque l'erreur de synchronisation est survenue, dans lequel
l'erreur de synchronisation inclut une erreur de synchronisation temporelle qui est une erreur liée à une synchronisation temporelle entre le dispositif de commande et l'appareil local (3), **caractérisé en ce que**, en tant que gestion d'erreur, l'appareil local (3) et le dispositif de commande sont arrêtés lorsque l'erreur de synchronisation temporelle est survenue.
